# EUROPÄISCHE PATENTSCHRIFT

(11) **EP 3 980 165 B1**
(45) Veröffentlichungstag und Bekanntmachung des Hinweises auf die Patenterteilung: **14.06.2023**
(21) Anmeldenummer: 20730607.7
(22) Anmeldetag: 03.06.2020
(51) Int. Cl.: B01D 63/02, B01D 61/18, C02F 3/12

(54) **MEMBRANFILTER**
MEMBRANE FILTER
FILTRE À MEMBRANE

(30) Priorität: 06.06.2019 DE 102019115265
(43) Veröffentlichungstag der Anmeldung: 13.04.2022
(73) Patentinhaber: membion GmbH, 52159 Roetgen (DE)
(72) Erfinder: VOLMERING, Dirk, 52070 Aachen (DE); VOSSENKAUL, Klaus, 52074 Aachen (DE)
(74) Vertreter: Bauer, Dirk
(86) Internationale Anmeldenummer: PCT/EP2020/065343
(87) Internationale Veröffentlichungsnummer: WO 2020/245195

(56) Entgegenhaltungen:
- WO-A1-02/22244
- WO-A1-2016/180628
- DE-A1- 19 811 945
- DE-B3-102013 218 188

## Beschreibung

Die Erfindung betrifft einen Membranfilter zum Filtern einer zu filtrierenden Flüssigkeit mit einem Fußelement, das mindestens einen Membranträger aufweist, der von der Flüssigkeit und einem Gas umströmbar ist, oben in dem mindestens einen Membranträger befestigten Hohlfasermembranen mit jeweils einem Lumen, in das ein flüssiges Permeat aus der Flüssigkeit filtrierbar ist, einem einstückig extrudierten und im Umfang geschlossenen Rohr, das die Hohlfasermembranen umgibt, einem Gaseinlass zum Einlassen des Gases unten in den Membranfilter, mindestens einem Permeatsammelraum des Fußelementes, der mit den Lumen verbunden ist, zum Sammeln des Permeats aus den Hohlfasermembranen, einem Permeatauslass des Fußelementes zum Ablassen des Permeats aus dem mindestens einen Permeatsammelraum seitlich aus dem Fußelement.

Ein Membranfilter mit den beschriebenen Merkmalen ist aus WO 2015/036459 A1 bekannt, die auch von den Erfindern angemeldet wurde.

Der bekannte Membranfilter ist konzipiert für die Filtration von feststoffreichen Abwässern, wie sie beispielsweise in biologischen Kläranlagen in Membranbioreaktoren (MBR) anzutreffen sind.

Bei einer der Ausführungsformen des bekannten Membranfilters sind Hohlfasermembranen des in getauchter Version einsetzbaren Membranfilters in genau einem Membranträger eines Fußelementes befestigt, der von der Flüssigkeit umströmbar ist. Das Fußelement weist einen Permeatsammelraum zum Sammeln des Permeats aus den Hohlfasermembranen auf, an den die Hohlfasermembranen mit Lumen angeschlossen sind. Die Hohlfasermembranen sind oben einzeln verschlossen. Das Fußelement weist ferner einen Permeatauslass zum Ablassen des Permeats aus dem Permeatsammelraum seitlich aus dem Fußelement auf. Zudem weist der Membranfilter unten einen Gaseinlass zum Einlassen des Gases in den Membranfilter auf.

Charakteristisch für diesen Membranfilter ist, dass die Hohlfasermembranen von einem im Umfang geschlossenen Rohr umgeben sind, das sich oben direkt an das Fußelement anschließt. Wie Rohr und Fußelement im Detail miteinander verbunden werden, lässt WO 2015/036459 A1 offen. Es ist jedoch aus Wartungsgesichtspunkten vorteilhaft, wenn die Verbindung von Rohr und Fußelement lösbar ist, ohne den Membranfilter dabei zu zerstören.

Aus den Zeichnungen in WO 2015/036459 A1 ist zu erkennen, dass sowohl das Rohr als auch das Fußelement an der Verbindungsstelle einen im Umfang nach außen weisenden Verbindungskeil aufweisen. Über diesen kann von außen eine Verbindungsschelle aufgeschnallt werden, die zu einer kraftschlüssigen Verbindung von Fußelement und Rohr führt. Derartige Rohrverbindungen sind auch in anderen Bereichen der Technik üblich. Alternativ können Rohr und Fußelement Flansche aufweisen, die miteinander verschraubt werden.

Den besagten Verbindungsmethoden von Rohr und Fußelement ist gemeinsam, dass sie nach außen im Umfang des Rohres Platz benötigen. Da bei großtechnischer Ausführung der Membranfilter viele der Rohre mit Fußelementen parallel nebeneinander in einem Rahmen montiert werden, reduziert die Größe von außen aufgebrachten Verbindungsschellen oder Verbindungsflanschen die Packungsdichte des gesamten Membranfilters, d.h. die Rohre müssen weiter voneinander beabstandet werden, wodurch die Anzahl der in einem Rahmen vorgegebener Größe installierbaren Membranrohre sinkt.

Hinzu kommt, dass der Schlamm, der im Inneren der Rohre im Bereich der Membranen aufgrund der dort eingetragenen Luft aufströmt, im kontinuierlichen Betrieb auch wieder nach unten strömen muss. Dies erfolgt im Außenbereich der Rohre, wo kein Lufteintrag stattfindet, d.h. bei einem großtechnischen Modul im Außenraum zwischen den einzelnen Rohren. Hier bilden die Kanten und Schrauben von Verbindungsschellen oder Flanschen Hindernisse, an denen sich leicht Haare und faserige Verbindungen festsetzen.

Neben dem Problem des Platzbedarfs für die beschriebenen Verbindungen von Rohr und Fußelement ergibt sich ein weiteres Problem bei dem bekannten Membranfilter: die Verbindungsstelle von Rohr und Fußelement liegt im Bereich der Membranen, d.h. oberhalb des Membranträgers. Da die Übergänge der beschriebenen Verbindungselemente auf der Innenseite konstruktionsbedingt in aller Regel Kanten oder einen leichten Versatz aufweisen, d.h. nicht glatt sind, können sich hier leicht Haare und faserige Verbindungen festsetzen, die zu einer Verblockung des Membranfilters führen, bzw. an denen die Membranen scheuern können.

Alternativ zu den lösbaren Verbindungen, kann das Rohr auch oben auf das Fußelement aufgeklebt werden. Dies schränkt jedoch die Wartungsmöglichkeiten des Membranfilters ein. Zudem besteht auch hier das Problem, von Kanten oder Kleberaustritten an der Verbindungsstelle, die zum Festsetzen von Haaren und faserigen Verbindungen oder dem Scheuern der Membranen an diesen Stellen führen können.

Im Hintergrund der Erfindung beschreibt auch DE 19811945 A1 einen Membranfilter, der ein Fußelement aufweist mit einem Membranträger, in dem Hohlfasermembranen befestigt sind. Auch an dieser Anmeldung war einer der Erfinder beteiligt. Hier werden die Hohlfasermembranen und das Fußelement von einem gemeinsamen Rohr umgeben, wobei das entstehende Permeat über einen Permeatauslass nach unten aus dem Rohr herausgeführt wird. Dies hat den Nachteil, das sich im Filtrationsbetrieb üblicherweise auf der Permeatseite bildendes Gas, welches beim Durchtritt der zu filtrierenden Flüssigkeit durch die Membranen ausgast und im Lumen der Hohlfasermembranen mit der Flüssigkeit nach unten transportiert wird, im Permeatsammelraum ansammelt und dort verbleibt. Bei der nächsten Rückspülung der Membranen wird dann zunächst dieses Gas und nicht wie gewünscht Flüssigkeit in die Membranen zurückgespült. Dadurch wird die Effektivität der Rückspülung und damit des gesamten Filtrationsbetriebs negativ beeinflusst.

### Aufgabe

Der Erfindung liegt die Aufgabe zugrunde, Kanten, an denen sich Haare oder Fasern festsetzen können oder an denen die Membranen scheuern können, zu vermeiden.

### Lösung

Ausgehend von dem bekannten Membranfilter wird nach der Erfindung vorgeschlagen, dass eine Unterkante des Rohres unterhalb des Permeatauslasses des Fußelementes liegt, der Permeatauslass seitlich durch eine Öffnung in einer Wandung des Rohres verläuft, ein Ringspalt zwischen dem mindestens einen Membranträger und dem Rohr als offener Strömungsquerschnitt für die Durchströmung der Flüssigkeit und des Gases dient und das Fußelement und das Rohr miteinander verbunden sind. Seitlich bedeutet dabei, dass der Permeatauslass im Wesentlichen quer zu den vertikal orientierten Hohlfasermembranen verläuft. Darunter zählen sowohl ein horizontaler als auch ein schräg nach unten oder oben geführter Verlauf des Permeatauslasses.

Dadurch wird gewährleistet, dass sich keinerlei Kanten oder Übergänge im Bereich der Membranen befinden, an denen sich Haare oder faserige Verbindungen festsetzen können oder an denen die Membranen scheuern können.

Gleichzeitig gewährleistet der seitliche Permeatauslass, dass sich eventuell bei der Filtration ausgasende Gase nicht im Permeatsammelraum anreichern, sondern direkt aus dem Membranfilter ausgeschleust werden.

Zudem werden platzaufwändige Verbindungselemente im Außenbereich des Rohres vermieden. Dadurch können die Rohre in einem großtechnischen Membranfilter dichter aneinander montiert werden, was sich positiv in einer Erhöhung der Packungsdichte des erfindungsgemäßen Membranfilters niederschlägt.

Durch seine Unempfindlichkeit gegen Haare und faserige Verbindungen in der zu filtrierenden Flüssigkeit ist der erfindungsgemäße Membranfilter speziell geeignet für die Filtration von feststoffreichen Abwässern, die einen hohen Anteil an Haaren und faserigen Verbindungen aufweisen, wie sie beispielsweise in biologischen Kläranlagen in Membranbioreaktoren (MBR) anzutreffen sind. Dabei kann der Membranfilter entweder in die Becken der Kläranlage getaucht werden oder mit Zu- und Abfuhrrohrleitungen versehen, trocken aufgestellt werden. Die Triebkraft für die Filtration wird bei der getauchten Variante in der Regel über einen permeatseitig angelegten Unterdruck realisiert, während die trocken aufgestellte Variante mit einem Überdruck auf Seiten der zu filtrierenden Flüssigkeit arbeitet.

Charakteristisch für den erfindungsgemäßen Membranfilter ist, dass die Hohlfasermembranen von einem einstückig extrudierten und im Umfang geschlossenen Rohr umgeben sind. Einstückig bedeutet dabei, dass das Rohr aus einem Stück besteht.

Die Hohlfasermembranen haben einen Durchmesser von weniger als 5 mm, meist 0,5 bis 3 mm und weisen eine Durchlässigkeit von Mikrofiltrationsmembranen oder Ultrafiltrationsmembranen auf. Die Verwendung von Hohlfasermembranen für die Umkehrosmose oder Nanofiltration ist auch möglich. Die Fixierung der Hohlfasermembranen erfolgt bevorzugt nur an deren Unterseite in einem Fußelement. Alternativ kann die Fixierung aber auch zusätzlich oben in einem Kopfelement erfolgen.

Um eine Verblockung des Membranfilters durch abfiltrierte Stoffe zu vermeiden, wird der Membranfilter kontinuierlich oder in periodischen Intervallen gespült. Üblicherweise verwendete Methoden zur physikalischen Spülung der Membranfilter arbeiten mit einer permeatseitigen Rückspülung der Hohlfasermembranen mit Flüssigkeit oder Gas kombiniert mit einer Gasblasenspülung auf der Außenseite der Hohlfasermembranen. Bei letzterer werden Gasblasen unten in den Membranfilter eingetragen, die dann entlang der Hohlfasermembranen aufsteigen und diese in der zu filtrierenden Flüssigkeit bewegen. Mit dem Aufsteigen der Gasblasen wird stets auch eine Aufwärtsströmung der Flüssigkeit erzeugt. Die Scherkraft der Zweiphasenströmung aus Gas und Flüssigkeit hat eine hohe Turbulenz, wodurch Beläge von den Membranen abgelöst und ausgespült werden. Bei Membranbioreaktoren wird als Gas üblicherweise Luft verwendet.

Der sogenannte Mammutpumpeneffekt, d.h. die durch aufsteigende Gasblasen induzierte Aufwärtsströmung der Flüssigkeit durch den Membranfilter hat eine besonders hohe Reinigungswirkung auf die Hohlfasermembranen, dadurch dass diese von dem im Umfang geschlossenen Rohr umgeben werden, weil dadurch die Gasblasen im Membranfilter, d.h. in unmittelbarer Nähe der Hohlfasermembranen gehalten werden. Der positive Effekt des Rohres wird im Hintergrund der Erfindung unter anderem in JP-2003-024937 und US-2006/0273007 A1 beschrieben.

Bei kleineren Ausführungsformen des Membranfilters, d.h. bis zu einem Durchmesser des Fußelementes von etwa 10 cm kann der Permeatauslass von außen durch das Rohr in das Fußelement festgeschraubt und damit mit diesem verbunden werden.

In einer vorteilhaften Ausgestaltung des Membranfilters erstreckt sich die Öffnung des Rohres bis zu dessen Unterkante. Dadurch kann das Rohr mit der Öffnung über das Fußelement und den seitlich aus dem Fußelement herausführenden Permeatauslass geschoben werden.

Der erfindungsgemäße Membranfilter kann einen im horizontalen Schnitt runden Membranträger und damit auch ein rundes Rohr aufweisen. Alternativ weisen der Membranträger und auch das Rohr einen rechteckigen, vieleckigen oder beliebig anders geformten Querschnitt auf.

Bei größer werdenden Abmessungen des Fußelementes und des RohrQuerschnitts ist es vorteilhaft, dass das Fußelement mehrere mit Membranen bestückte Membranträger aufweist, die von der Flüssigkeit umströmbar sind. Dadurch wird eine zu große zusammenhängende, mit Membranen bestückte Querschnittsfläche des Membranträgers vermieden, die zu einer Verschlammung der Hohlfasermembranen führen kann.

Um die Bauhöhe des Membranfilters optimal auszunutzen, erweist es sich als vorteilhaft, dass auch der Gaseinlass seitlich durch die Öffnung des Rohres verläuft. Dadurch benötigt der Gaseinlass keine zusätzliche Bauhöhe im Membranfilter.

Aus Gründen der Statik ist es insbesondere bei größeren Querschnitten des Fußelementes sinnvoll, dieses an zwei gegenüberliegenden Seiten im Rohr zu befestigen. Dazu kann beispielsweise der Gaseinlass seitlich durch eine zweite, gegenüberliegende Öffnung in der Wandung des Rohres geführt werden. In diesem Fall bilden seitlicher Permeatauslass und seitlicher Lufteinlass zwei gegenüberliegende Anker, die das Fußelement im Rohr fixieren und halten.

In einer vorteilhaften Ausgestaltung des Membranfilters sind das Fußelement und das Rohr durch Verbindungselemente miteinander verbunden. In diesem Fall kann die Verbindung formschlüssig erfolgen, beispielsweise über einfache einklickbare Blindstopfen, oder alternativ kraftschlüssig, beispielsweise über eine Verschraubung. Derartige Verbindungselemente bilden eine einfache und kostengünstige Fixierung des Fußelementes in dem Rohr.

Die Befestigung der Verbindungselemente am Fußelement kann beispielsweise über an dem Fußelement ausgebildete Wandungen erfolgen, die das Fußelement im Bereich der Verbindung zum Rohr gleichzeitig zusätzlich aussteifen und stabilisieren. In einer bevorzugten Ausführung des erfindungsgemäßen Membranfilters durchdringen die Verbindungselemente jeweils das Rohr und mindestens eine Wandung des Fußelementes.

Zudem können die Verbindungselemente derart gestaltet werden, dass nach deren Entfernung das Rohr und das Fußelement manuell wieder lösbar sind. Dies erweist sich insbesondere zu Wartungszwecken des Membranfilters als praktisch. Zudem hat es den Vorteil, dass bei einem Austausch der Membranfilter nach Ablauf der Lebensdauer der Hohlfasermembranen, das alte Rohr auf ein Fußelement mit neuen Hohlfasermembranen gesteckt werden kann, wodurch das Rohr wiederverwendet werden kann.

Sollte sich beim mehrjährigen Betrieb der Filter zeigen, dass das manuelle Lösen des Rohres vom Fußelement aus wartungstechnischen Gesichtspunkten nicht erforderlich ist, so können das Rohr und das Fußelement als kostengünstige Alternative beim Aufschieben des Rohres auch miteinander verklebt werden.

### Ausführungsbeispiele

Die Erfindung wird nachfolgend anhand von Ausführungsbeispielen erläutert. Es zeigen
- Fig. 1a-c: Details und Schnitte eines ersten erfindungsgemäßen Membranfilters,
- Fig. 2: einen Detailschnitt eines zweiten erfindungsgemäßen Membranfilters,
- Fig. 3a/b: Teilansichten eines dritten erfindungsgemäßen Membranfilters,
- Fig. 4a/b: einen Schnitt und eine Ansicht eines vierten erfindungsgemäßen Membranfilters,
- Fig. 5a-d: Details eines fünften erfindungsgemäßen Membranfilters,
- Fig. 5e: den fünften erfindungsgemäßen Membranfilter im getauchten Betrieb - exemplarisch für den Betrieb von erfindungsgemäßen Membranfiltern,
- Fig. 6a-d: Teilansichten zur Montage eines sechsten erfindungsgemäßen Membranfilters,
- Fig. 7: Teilansichten eines siebten erfindungsgemäßen Membranfilters während der Montage des Rohres

Die in den Figuren dargestellten Zeichnungen sind nicht maßstäblich. Alle nicht angegebenen Details von im Folgenden beschriebenen erfindungsgemäßen Membranfiltern sind identisch mit den Ausführungen bereits zuvor beschriebener erfindungsgemäßer Membranfilter.

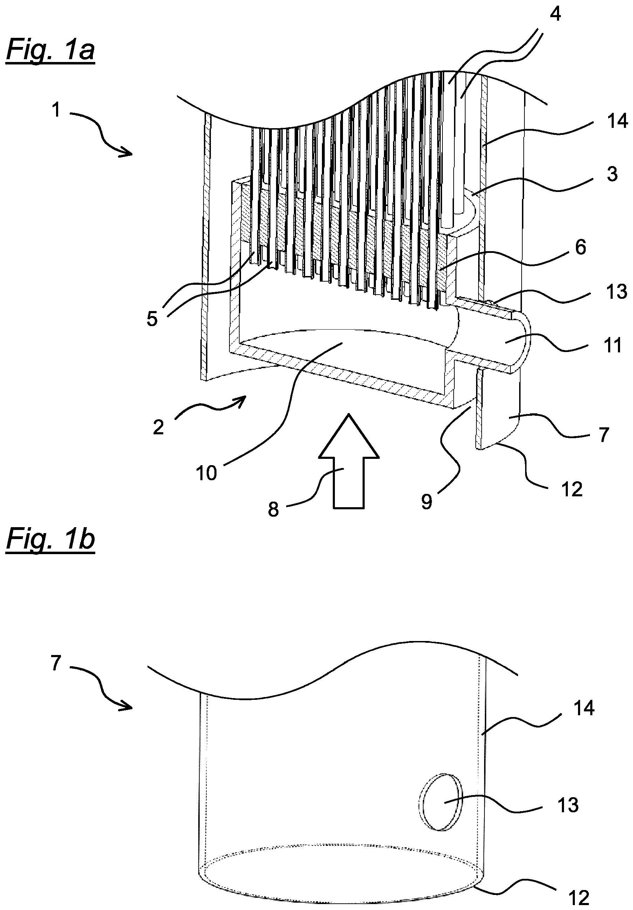

Die Figur 1a zeigt einen Schnitt durch den ersten erfindungsgemäßen Membranfilter 1 zum Filtern einer zu filtrierenden Flüssigkeit.

Dieser weist ein Fußelement 2 auf mit genau einem Membranträger 3, der von der Flüssigkeit und einem Gas umströmbar ist. Der Membranträger 3 hat einen runden Querschnitt und einen Durchmesser von 75 mm. Fußelement 2 und Membranträger 3 sind in diesem Fall identisch.

Oben in dem Membranträger 3 sind Hohlfasermembranen 4 befestigt mit jeweils einem Lumen 5, in das ein flüssiges Permeat aus der Flüssigkeit filtrierbar ist. Die Hohlfasermembranen 4 sind gewebeverstärkt und haben einen Außendurchmesser von 2,5 mm. Die Anzahl der dargestellten Hohlfasermembranen 4 entspricht nicht der tatsächlichen Anzahl der Hohlfasermembranen 4.

Die Befestigung der Hohlfasermembranen 4 im Membranträger 3 erfolgt über eine Harzschicht 6, in die die Hohlfasermembranen 4 abdichtend unten eingegossen sind, wobei die Lumen 5 der Hohlfasermembranen 4 offen bleiben.

Ferner weist der Membranfilter 1 ein einstückig extrudiertes Rohr 7 auf, das die Hohlfasermembranen 4 des Fußelementes 2 umgibt, sowie einen Gaseinlass 8 zum Einlassen des Gases unten in den Membranfilter 1. Das Rohr 7 hat einen Außendurchmesser von 100 mm. Zwischen Membranträger 3 und Rohr 7 befindet sich ein Ringspalt 9 mit einer Breite von 10 mm. Dieser dient als offener Strömungsquerschnitt für die Durchströmung der Flüssigkeit und des Gases.

Zudem weist das Fußelement 2 einen Permeatsammelraum 10 auf, der mit den Lumen 5 der Hohlfasermembranen 4 verbunden ist, zum Sammeln des Permeats aus den Hohlfasermembranen 4 und einen Permeatauslass 11 zum Ablassen des Permeats aus dem Permeatsammelraum 10 seitlich aus dem Fußelement 2, d.h. im Wesentlichen quer zu den Hohlfasermembranen 4.

Charakteristisch für den erfindungsgemäßen Membranfilter 1 ist, dass eine Unterkante 12 des Rohres 7 im montierten Zustand des Membranfilters 1 unterhalb des Permeatauslasses 11 liegt und der Permeatauslass 11 seitlich durch eine Öffnung 13 in einer Wandung 14 des Rohres 7 verläuft.

Figur 1b zeigt den unteren Teil des Rohres 7 mit der Öffnung 13 sowie der Unterkante 12 und der Wandung 14.

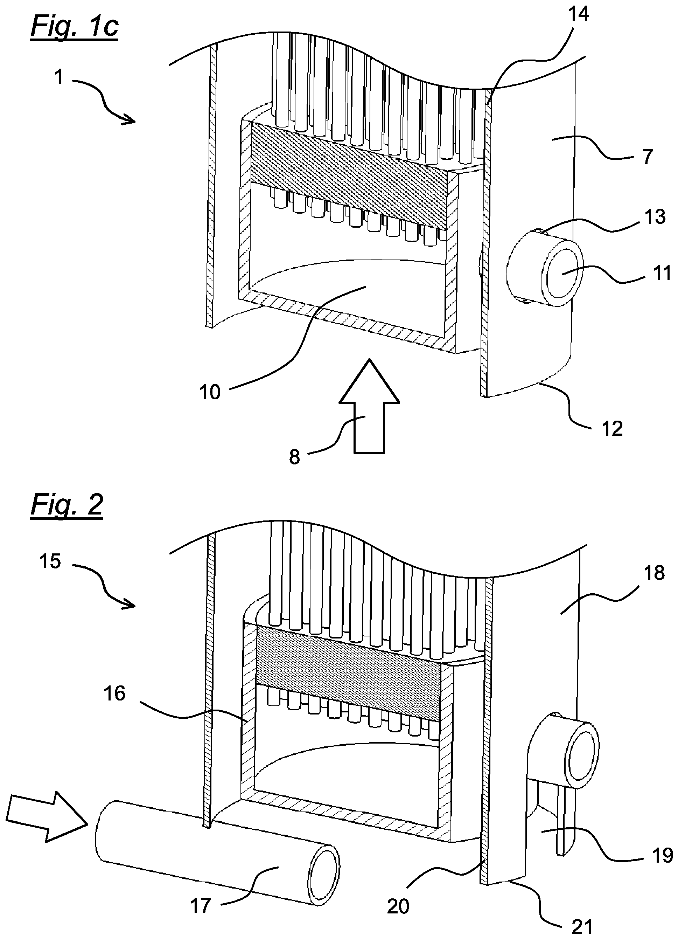

Figur 1c zeigt einen weiteren Schnitt durch den unteren Teil des Membranfilters 1. Dabei ist zu erkennen, dass der Permeatauslass 11 durch die Öffnung 13 in der Wandung 14 des Rohres 7 verläuft und dabei die Unterkante 12 des Rohres 7 unterhalb des Permeatauslasses 11 liegt. Die Fixierung des Fußelementes 2 im Rohr 7 erfolgt über einen nicht dargestellten Abstandshalter zwischen Rohr 7 und Membranträger 3.

Figur 2 zeigt einen Schnitt durch den unteren Teil eines zweiten erfindungsgemäßen Membranfilter 15. Das Fußelement 16 dieses Membranfilters 15 ist identisch mit dem Fußelement 2 des ersten erfindungsgemäßen Membranfilters 1. Bei dem zweiten Membranfilter 15 ist der Gaseinlass 17 rohrförmig gestaltet und endet mittig unterhalb des Fußelementes 16 und auch unterhalb des Rohres 18. Im Unterschied zum ersten Membranfilter 1 erstreckt sich beim zweiten erfindungsgemäßen Membranfilter 15 die Öffnung 19 in der Wandung 20 des Rohres 18 bis zur Unterkante 21 des Rohres 18. Dadurch kann das Rohr 18 von oben auf das Fußelement 16 des Membranfilters 15 aufgeschoben werden.

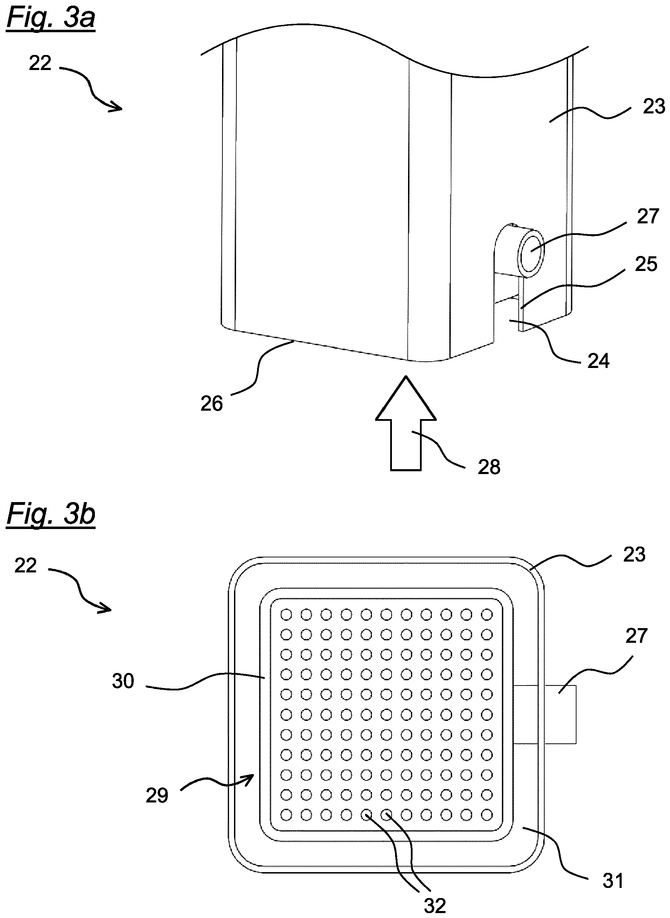

Figur 3a zeigt eine Ansicht des unteren Teils eines dritten erfindungsgemäßen Membranfilters 22. Im Unterschied zu den ersten beiden Membranfiltern weist der Membranfilter 22 keinen runden sondern einen rechteckigen Querschnitt auf. In diesem Fall ist auch das Rohr 23 rechteckig, wobei sich die Öffnung 24 in der Wandung 25 des Rohres 23 wie auch beim zweiten erfindungsgemäßen Membranfilter 15 bis zu einer Unterkante 26 des Rohres 23 erstreckt. Der Permeatauslass 27 verläuft seitlich durch die Öffnung 24. Der Gaseinlass 28 erfolgt von unten in das Rohr 23 und damit in den Membranfilter 22.

Figur 3b zeigt eine Draufsicht auf den Membranfilter 22. Das Fußelement 29 ist in diesem Fall ebenfalls rechteckig gestaltet. Auch hier weist das Fußelement 29 genau einen Membranträger 30 auf. Beide sind auch bei diesem Membranfilter 22 identisch. Zwischen Membranträger 30 und Rohr 23 besteht ein rechteckiger Ringspalt 31 für die Durchströmung der Flüssigkeit und des Gases in den Membranfilter 22. In dem Membranträger 30 sind oben Hohlfasermembranen 32 befestigt, die oben einzeln verschlossen sind und mit ihren jeweiligen Lumen an der Unterseite offen an einen Permeatsammelraum des Fußelementes 29 angeschlossen sind.

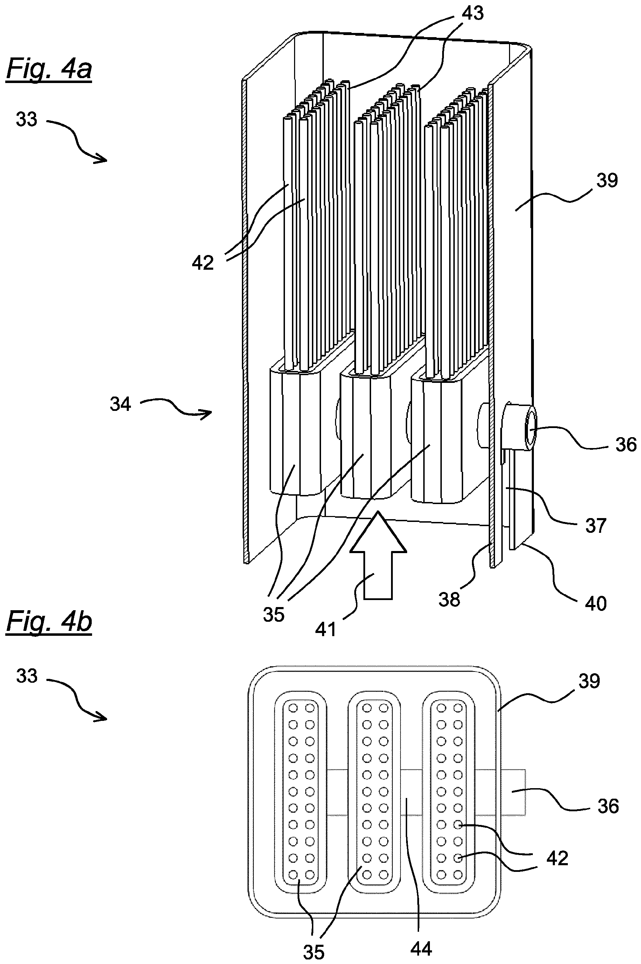

Figur 4a zeigt einen Schnitt durch einen weiteren erfindungsgemäßen Membranfilter 33 mit rechteckigem Querschnitt. Bei diesem Membranfilter 33 weist das Fußelement 34 drei gleichartige, mit Hohlfasermembranen 42 bestückte Membranträger 35 auf, die einen gemeinsamen Permeatauslass 36 haben. Dieser verläuft seitlich durch eine Öffnung 37 in einer Wandung 38 des rechteckigen Rohres 39 des Membranfilters 33. Die Öffnung 37 erstreckt sich bis zur Unterkante 40 des Rohres 39, so dass das Rohr 39 von oben auf das Fußelement 34 des Membranfilters 33 aufgeschoben werden kann. Der Gaseinlass 41 erfolgt von unten in den Membranfilter 33.

Die Hohlfasermembranen 42 sind unten in den Membranträgern 35 offen eingeharzt fixiert und an ihren oberen Enden 43 jeweils einzeln verschlossen. Dadurch können in der zu filtrierenden Flüssigkeit enthaltene Haare und faserige Verbindungen ungehindert nach oben mit dem durch den Membranfilter 33 von unten nach oben strömendem Gemisch aus Flüssigkeit und eingetragenem Gas ausgetragen werden. Das Rohr 39 überragt die die oberen Enden 43 der Membranen 42 um 5 cm.

Figur 4b zeigt eine Draufsicht auf den Membranfilter 33. Dabei ist zu erkennen, dass die Membranträger 35 des Fußelementes 34 voneinander beabstandet sind, damit die Flüssigkeit und das Gas auch zwischen den Membranträgern 35 strömen und diese somit vollständig umströmen kann. Die Membranträger 35 sind im Fußelement 34 über einen Anker 44 miteinander verbunden, der sich in Verlängerung des Permeatauslasses 36 erstreckt.

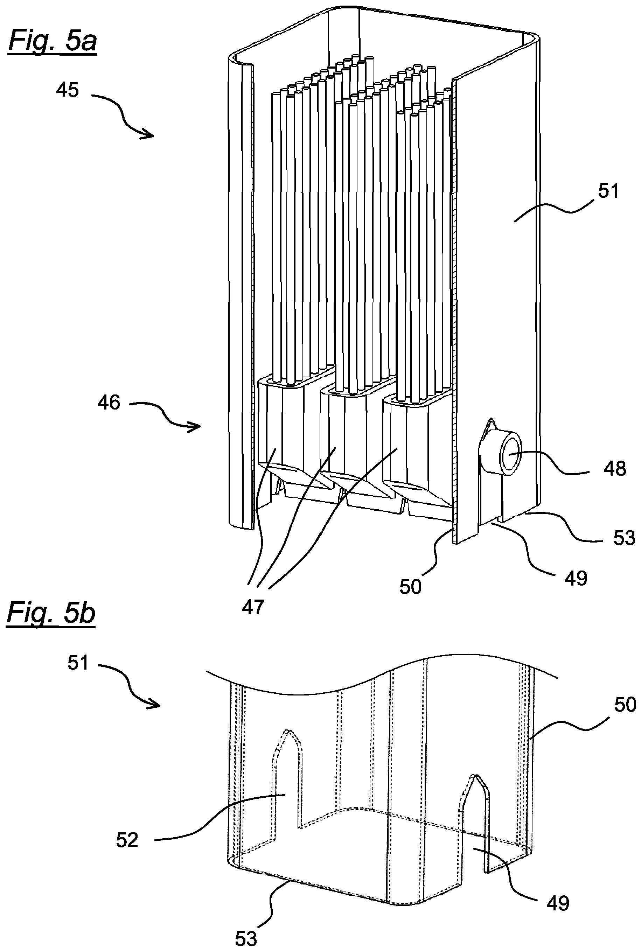

Figur 5a zeigt einen Schnitt durch den unteren Teil eines weiteren erfindungsgemäßen Membranfilters 45. Das Fußelement 46 weist, wie auch beim Membranfilter 33, drei gleichartige Membranträger 47 auf, die diesmal unten an ihrer Anströmseite abgeschrägt sind, um das Abgleiten von Haaren und faserigen Verbindungen der zu filtrierenden Flüssigkeit zu ermöglichen.

Der Permeatauslass 48 des Fußelementes 46 erfolgt seitlich durch eine Öffnung 49 in der Wandung 50 des rechteckigen Rohres 51. Damit liegt eine Unterkante 53 des Rohres 51 unterhalb des Permeatauslasses 48.

Figur 5b zeigt eine Ansicht des unteren Teils des Rohres 51 des Membranfilters 45. Dieses hat neben der Öffnung 49 eine zweite Öffnung 52 in der Wandung 50 gegenüberliegend von der Öffnung 49. Beide Öffnungen 49 und 52 erstrecken sich bis zur Unterkante 53 des Rohres 51. Dadurch kann das Rohr 51 von oben auf das Fußelement 46 aufgeschoben werden.

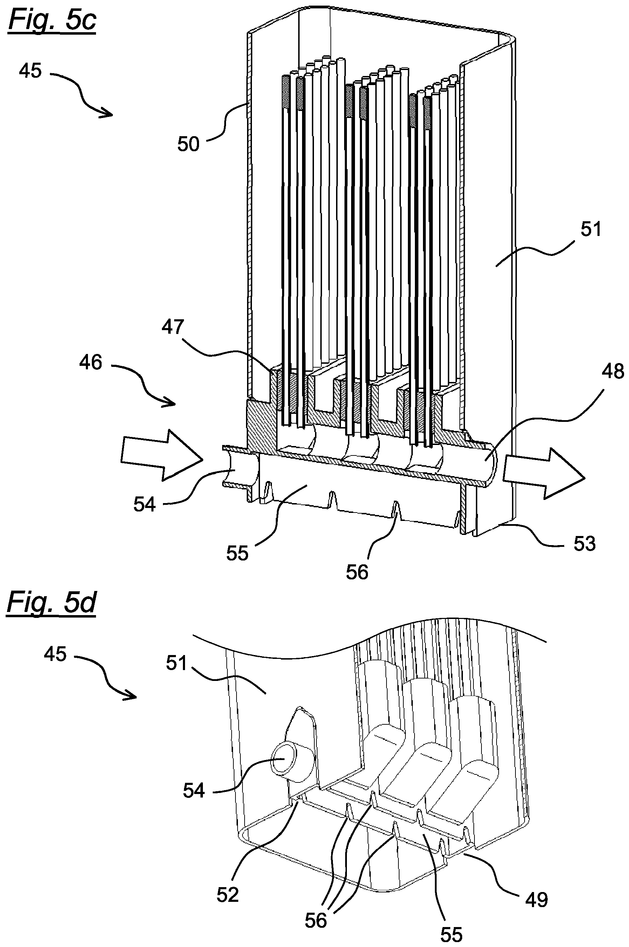

Figur 5c zeigt in einem Schnitt durch den Membranfilter 45, dass der Gaseinlass 54 durch die zweite Öffnung 52 des Rechteckrohres 51 verläuft. Durch den Gaseinlass 54 kann seitlich Gas in ein Gasverteilsystem 55 des Fußelementes 46 unterhalb der Membranträger 47 eingetragen werden. Das Gasverteilsystem 55 ist als nach unten offene Wanne gestaltet mit nach unten offenen Schlitzen 56 in den Seitenwänden zur Verteilung des Gases innerhalb des Membranfilters 45.

Figur 5d zeigt eine Ansicht von unten mit Teilschnitt des Membranfilters 45. Hier ist der durch die zweite Öffnung 52 im Rohr 51 verlaufende Gaseinlass 54 zu sehen mit dem nach unten offenen Gasverteilsystem 55 und den Schlitzen 56.

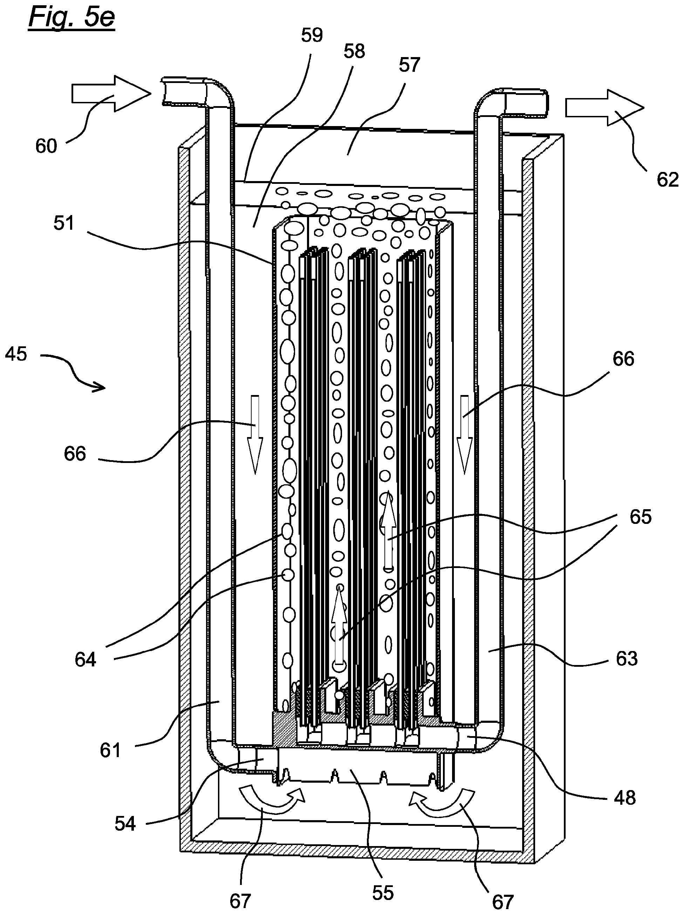

Figur 5e zeigt einen Schnitt durch den erfindungsgemäßen Membranfilter 45 im getauchten Betrieb in einer Biologischen Kläranlage. Dabei ist der Membranfilter 45 in ein Becken 57 mit zu filtrierender Flüssigkeit 58 abgetaucht, so dass sich der Membranfilter 45 vollständig unter der Flüssigkeitsoberfläche 59 befindet. Die zu filtrierende Flüssigkeit ist in diesem Fall Schlamm der Kläranlage. Die Begasung des Membranfilters 45 zu Spülzwecken der Membranen erfolgt über eingetragene Luft 60. Diese wird über eine mit dem Gaseinlass 54 verbundene Luft-Rohrleitung von unten in den Membranfilter 45 eingeblasen und über das Gasverteilsystem 55 im Membranfilter 45 verteilt.

Das während der Filtration entstehende Permeat 62 wird über eine an dem Permeatauslass 48 angeschlossene Permeat-Rohrleitung 63 aus dem Membranfilter 45 abgeführt. Im Membranfilter 45 steigt die eingetragene Luft 60 in Form von Luftblasen 64 auf und bewirkt dadurch eine Aufwärtsströmung 65 des Gemisches aus Luft 60 und zu filtrierender Flüssigkeit 58, d.h. des Schlamms. Im stationären Zustand erfolgt die ausgleichende Abwärtsströmung 66 der zu filtrierenden Flüssigkeit 58 auf der Außenseite des Rohres 51 im Becken 57. An der Unterseite des Membranfilters 45 erfolgt dann durch die Sogwirkung des Mammutpumpeneffektes der im Membranfilter 45 aufsteigenden Luftblasen 64 eine Strömungsumlenkung 67 der zu filtrierenden Flüssigkeit 58.

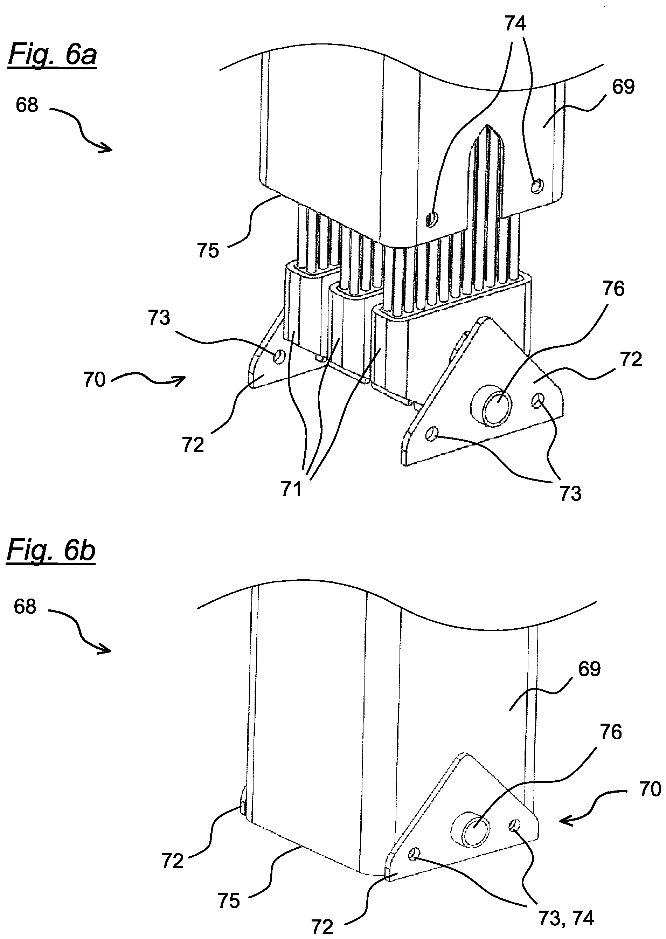

Figur 6a zeigt eine Ansicht des unteren Teils eines weiteren erfindungsgemäßen Membranfilters 68 während der Montage des Rohres 69 auf das Fußelement 70. Das Fußelement 70 weist drei gleichartige mit Membranen bestückte

Membranträger 71 auf sowie zwei Seitenwände 72 mit jeweils zwei Bohrungen 73. Die Seitenwände 72 haben eine stabilisierende und aussteifende Wirkung auf den Membranfilter 68 an der Verbindungsstelle von Rohr 69 und Fußelement 70. Auch die Wandung des Rohres 69 weist Bohrungen 74 auf.

Wie im zuvor beschriebenen Membranfilter 45 hat das Rohr 69 zwei Öffnungen in der Wandung, die sich bis zur Unterkante 75 des Rechteckrohres 69 erstrecken. Diese Öffnungen werden bei der Montage des Membranfilters 68 von oben über den Permeatauslass 76 und den Lufteinlass geschoben, die beide Teil des Fußelementes 70 sind.

Figur 6b zeigt, dass nach Aufschieben des Rohres 69 auf das Fußelement 70 die Bohrungen 73 in den Wandungen 72 des Fußelementes 70 mit den Bohrungen 74 des Rohres 69 fluchten.

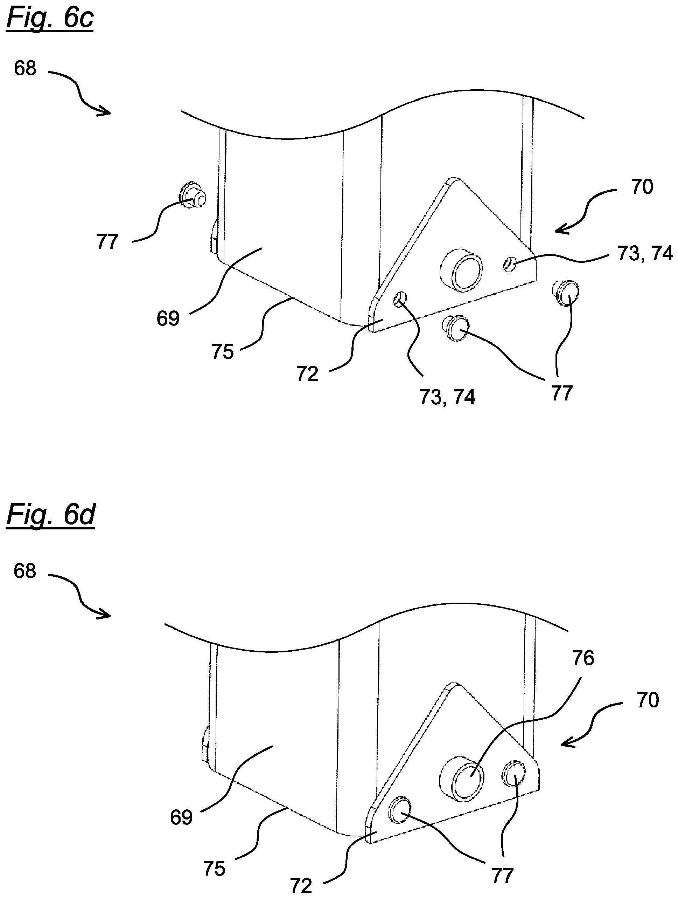

Figur 6c zeigt, dass Verbindungselemente 77 in die fluchtenden Bohrungen 73 und 74 des Fußelementes 70 und des Rohres 69 eingebracht werden.

Figur 6d zeigt den montierten Zustand des erfindungsgemäßen Membranfilters 68. Dabei durchdringen die Verbindungselemente 77 sowohl die Wandungen 72 des Fußelementes 70 als auch das Rohr 69. Auch beim montierten Membranfilter 68 liegt die Unterkante 75 des Rohres 69 unterhalb des Permeatauslasses 76.

Nach Entfernung der Verbindungselemente 77 sind Rohr 69 und Fußelement 70 manuell lösbar.

Alternativ können Rohr 69 und Fußelement 70 auch miteinander verklebt werden.

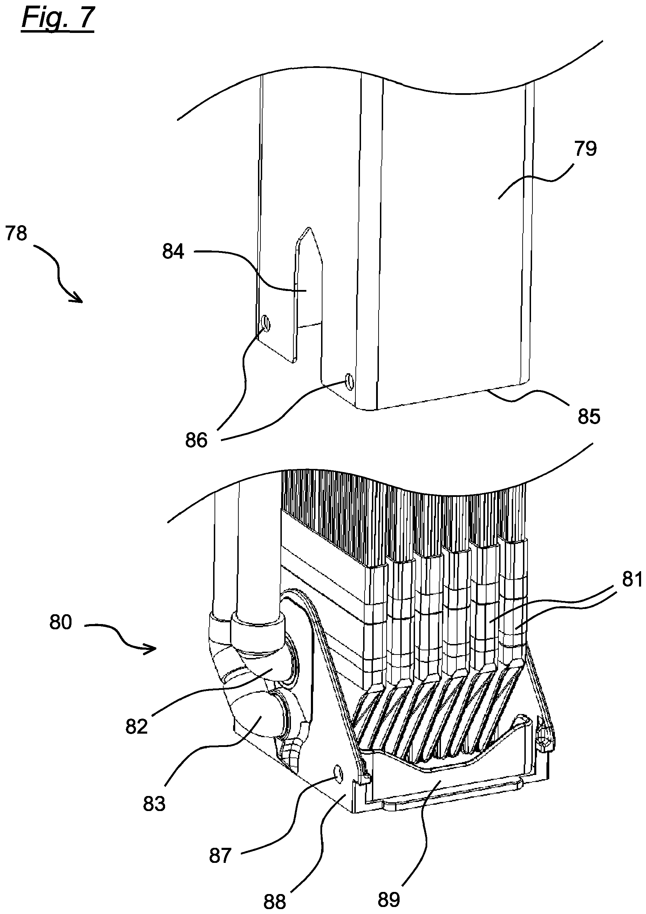

Figur 7 zeigt einen weiteren erfindungsgemäßen Membranfilter 78 mit einem rechteckigen Rohr 79 und einem Fußelement 80 während der Montage. Das Fußelement 80 weist 6 gleichartige mit Membranen bestückte Membranträger 81 auf sowie einen Permeatauslass 82 und einen auf der gleichen Seite des Fußelementes 80 liegenden Gaseinlass 83. Beim Aufschieben des Rechteckrohres 79 auf das Fußelement 80 wird die Öffnung 84 des Rechteckrohres 79 von oben über den Permeatauslass 82 und den Gaseinlass 83 geschoben. Das Rohr 79 weist zudem eine gegenüberliegende zweite Öffnung auf, die sich ebenfalls bis zur Unterkante 85 des Rechteckrohres 79 erstreckt. Diese wird über einen Verbindungsanker der Membranträger 81 des Fußelementes 80 geschoben und dient der mechanischen Festigkeit des Membranfilters 78. Das Rechteckrohr 79 weist zudem 4 Bohrungen 86 auf, die nach Aufschieben auf das Fußelement 80 mit Bohrungen 87 in Wandungen 88 des Fußelementes 80 fluchten. Aus Stabilitätsgründen weist das Fußelement zudem Verbindungswände 89 zwischen den Wandungen 88 auf, die die Aufnahme des Rohres 79 im Fußelement 80 mechanisch unterstützen.

Die Verbindung von Fußelement 80 und Rohr 79 erfolgt über 4 nicht dargestellte Verbindungselemente, die in die fluchtenden Bohrungen 86 und 87 eingeführt werden.

In den Figuren sind
- 1: Membranfilter
- 2: Fußelement
- 3: Membranträger
- 4: Hohlfasermembran
- 5: Lumen
- 6: Harzschicht
- 7: Rohr
- 8: Gaseinlass
- 9: Ringspalt
- 10: Permeatsammelraum
- 11: Permeatauslass
- 12: Unterkante
- 13: Öffnung
- 14: Wandung
- 15: Membranfilter
- 16: Fußelement
- 17: Gaseinlass
- 18: Rohr
- 19: Öffnung
- 20: Wandung
- 21: Unterkante
- 22: Membranfilter
- 23: Rohr
- 24: Öffnung
- 25: Wandung
- 26: Unterkante
- 27: Permeatauslass
- 28: Gaseinlass
- 29: Fußelement
- 30: Membranträger
- 31: Ringspalt
- 32: Hohlfasermembran
- 33: Membranfilter
- 34: Fußelement
- 35: Membranträger
- 36: Permeatauslass
- 37: Öffnung
- 38: Wandung
- 39: Rohr
- 40: Unterkante
- 41: Gaseinlass
- 42: Hohlfasermembran
- 43: oberes Ende
- 44: Anker
- 45: Membranfilter
- 46: Fußelement
- 47: Membranträger
- 48: Permeatauslass
- 49: Öffnung
- 50: Wandung
- 51: Rohr
- 52: zweite Öffnung
- 53: Unterkante
- 54: Gaseinlass
- 55: Gasverteilsystem
- 56: Schlitze
- 57: Becken
- 58: zu filtrierende Flüssigkeit
- 59: Flüssigkeitsspiegel
- 60: Luft
- 61: Luft-Rohrleitung
- 62: Permeat
- 63: Permeat-Rohrleitung
- 64: Luftblase
- 65: Aufwärtsströmung
- 66: Abwärtsströmung
- 67: Strömungsumlenkung
- 68: Membranfilter
- 69: Rohr
- 70: Fußelement
- 71: Membranträger
- 72: Wandung des Fußelementes
- 73: Bohrung in Wandung des Fußelementes
- 74: Bohrung im Rohr
- 75: Unterkante
- 76: Permeatauslass
- 77: Verbindungselement
- 78: Membranfilter
- 79: Rohr
- 80: Fußelement
- 81: Membranträger
- 82: Permeatauslass
- 83: Gaseinlass
- 84: Öffnung
- 85: Unterkante
- 86: Bohrung im Rohr
- 87: Bohrung in Wandung des Fußelementes
- 88: Wandung des Fußelementes
- 89: Verbindungswand

## Patentansprüche

1. Membranfilter (1, 15, 22, 33, 45, 68, 78) zum Filtern einer zu filtrierenden Flüssigkeit (58) mit
a. einem Fußelement (2, 16, 29, 34, 46, 70, 80), das mindestens einen Membranträger (3, 30, 35, 47, 71, 81) aufweist, der von der Flüssigkeit (58) und einem Gas umströmbar ist,
b. oben in dem mindestens einen Membranträger (3, 30, 35, 47, 71, 81) befestigten Hohlfasermembranen (4, 32, 42) mit jeweils einem Lumen (5), in das ein flüssiges Permeat (62) aus der Flüssigkeit (58) filtrierbar ist,
c. einem einstückig extrudierten und im Umfang geschlossenen Rohr (7, 18, 23, 39, 51, 69, 79), das die Hohlfasermembranen (4, 32, 42) umgibt,
d. einem Gaseinlass (8, 17, 28, 41, 54, 83) zum Einlassen des Gases unten in den Membranfilter (1, 15, 22, 33, 45, 68, 78),
e. mindestens einem Permeatsammelraum (10) des Fußelementes (2, 16, 29, 34, 46, 70, 80), der mit den Lumen (5) verbunden ist, zum Sammeln des Permeats (62) aus den Hohlfasermembranen (4, 32, 42),
f. einem Permeatauslass (11, 27, 36, 48, 76, 82) des Fußelementes (2, 16, 29, 34, 46, 70, 80) zum Ablassen des Permeats (62) aus dem mindestens einen Permeatsammelraum (10) seitlich aus dem Fußelement (2, 16, 29, 34, 46, 70, 80),
***dadurch gekennzeichnet, dass*** eine Unterkante (12, 21, 26, 40, 53, 76, 85) des Rohres (7, 18, 23, 39, 51, 69, 79) unterhalb des Permeatauslasses (11, 27, 36, 48, 76, 82) liegt, der Permeatauslass (11, 27, 36, 48, 76, 82) seitlich durch eine Öffnung (13, 19, 24, 37, 49, 84) in einer Wandung (10, 20, 25, 38, 50) des Rohres (7, 18, 23, 39, 51, 69, 79) verläuft, ein Ringspalt (9, 31) zwischen dem mindestens einen Membranträger (3, 30, 35, 47, 71, 81) und dem Rohr (7, 18, 23, 39, 51, 69, 79) als offener Strömungsquerschnitt für die Durchströmung der Flüssigkeit (58) und des Gases dient und das Fußelement (2, 16, 29, 34, 46, 70, 80) und das Rohr (7, 18, 23, 39, 51, 69, 79) miteinander verbunden sind.

2. Membranfilter (1, 15, 22, 33, 45, 68, 78) nach Anspruch 1, ***dadurch gekennzeichnet, dass*** sich die Öffnung (13, 19, 24, 37, 49, 84) bis zur Unterkante (12, 21, 26, 40, 53, 76, 85) des Rohres (7, 18, 23, 39, 51, 69, 79) erstreckt.

3. Membranfilter (1, 15, 22, 33, 45, 68, 78) nach einem der Ansprüche 1 oder 2, ***dadurch gekennzeichnet, dass*** das Rohr (7, 18, 23, 39, 51, 69, 79) einen rechteckigen Querschnitt aufweist.

4. Membranfilter (1, 15, 22, 33, 45, 68, 78) nach einem der vorhergehenden Ansprüche, ***dadurch gekennzeichnet, dass*** das Fußelement (2, 16, 29, 34, 46, 70, 80) mehrere mit Hohlfasermembranen bestückte Membranträger (3, 30, 35, 47, 71, 81) aufweist, die von der Flüssigkeit (58) umströmbar sind.

5. Membranfilter (1, 15, 22, 33, 45, 68, 78) nach einem der vorhergehenden Ansprüche, ***dadurch gekennzeichnet, dass*** der Gaseinlass (8, 17, 28, 41, 54, 83) seitlich durch die Öffnung (13, 19, 24, 37, 49, 84) des Rohres (7, 18, 23, 39, 51, 69, 79) verläuft.

6. Membranfilter (1, 15, 22, 33, 45, 68, 78) nach einem der Ansprüche 1 bis 4, ***dadurch gekennzeichnet, dass*** der Gaseinlass (8, 17, 28, 41, 54, 83) seitlich durch eine zweite Öffnung (52) in der Wandung (10, 20, 25, 38, 50) des Rohres (7, 18, 23, 39, 51, 69, 79) verläuft.

7. Membranfilter (1, 15, 22, 33, 45, 68, 78) nach einem der vorhergehenden Ansprüche, ***dadurch gekennzeichnet, dass*** das Fußelement (2, 16, 29, 34, 46, 70, 80) und das Rohr (7, 18, 23, 39, 51, 69, 79) durch Verbindungselemente (77) miteinander verbunden sind.

8. Membranfilter (1, 15, 22, 33, 45, 68, 78) nach Anspruch 7, ***dadurch gekennzeichnet, dass*** die Verbindungselemente (77) jeweils das Rohr (7, 18, 23, 39, 51, 69, 79) und mindestens eine Wandung (72, 88) des Fußelementes (2, 16, 29, 34, 46, 70, 80) durchdringen.

9. Membranfilter (1, 15, 22, 33, 45, 68, 78) nach einem der Ansprüche 7 oder 8, ***dadurch gekennzeichnet, dass*** das Rohr (7, 18, 23, 39, 51, 69, 79) und das Fußelement (2, 16, 29, 34, 46, 70, 80) nach Entfernung der Verbindungselemente (77) manuell lösbar sind.

10. Membranfilter (1, 15, 22, 33, 45, 68, 78) nach einem der Ansprüche 1 bis 8, ***dadurch gekennzeichnet, dass*** das Rohr (7, 18, 23, 39, 51, 69, 79) und das Fußelement (2, 16, 29, 34, 46, 70, 80) miteinander verklebt sind.

## Claims

1. A membrane filter (1, 15, 22, 33, 45, 68, 78) configured to filter a liquid (58), the membrane filter comprising:
a. a base element (2, 16, 29, 34, 46, 70, 80) including at least one membrane carrier (3, 30, 35, 47, 71, 81) that is externally flowable by the liquid (58) and a gas;
b. hollow fiber membranes (4, 32, 42) respectively including a lumen (5) and attached at a top in the at least one membrane carrier (3, 30, 35, 47, 71, 81) wherein a liquid permeate (62) is filterable from the liquid (58) into the lumen;
c. a one piece extruded circumferentially closed pipe (7, 18, 23, 39, 51, 69, 70) that envelops the hollow fiber membranes (4, 32, 42);
d. a gas inlet (8, 17, 28, 41, 54, 83) configured to let gas into a bottom of the membrane filter (1, 15, 22, 33, 45, 68, 78);
e. at least one permeate collection cavity (10) of the base element (2, 16, 29, 34, 46, 70,80) that is connected with the lumen (5) and configured to collect the permeate (62) from the hollow fiber membranes (4, 32, 42);
f. a permeate outlet (11, 27, 36, 48, 76, 82) of the base element (2, 16, 29, 34, 46, 70, 80) configured to drain the permeate (62) from the at least one permeate collection cavity (10) laterally from the base element (2, 16, 29, 34, 46, 70, 80),
**characterized in that** a bottom edge (12, 21, 26, 40, 53, 76, 85) of the pipe (7, 18, 23, 39, 51, 69, 79) is arranged below the permeate outlet (11, 27, 36, 48, 76, 82) and the permeate outlet (11, 27, 36, 48, 77, 82) runs laterally through an opening (13, 19, 24, 37, 49, 84) in a wall (10, 20, 25, 38, 50) of the pipe (7, 18, 23, 39, 51, 69, 79), an annular gap (9, 31) between the at least one membrane carrier (3, 30, 35, 47, 71, 81) and the pipe (7, 18, 23, 39, 51, 69, 79) is configured as an open flow cross section for a flow of the liquid (58) and the gas and the base element (2, 16, 29, 34, 46, 70, 80) and the pipe (7, 18, 23, 39, 51, 69, 79) are connected with each other.

2. The membrane filter (1, 15, 22, 33, 45, 68, 78) according to claim 1, **characterized in that** the opening (12, 19, 24, 37, 49, 84) extends to the bottom edge (12, 21, 26, 40, 53, 76, 85) of the pipe (7, 18, 23, 39, 51, 69, 79).

3. The membrane filter (1, 15, 22, 33, 45, 68, 78) according to one of the claims 1 or 2, **characterized in that** the pipe (7, 18, 23, 39, 51, 69, 79) has a rectangular cross section.

4. The membrane filter (1, 15, 22, 33, 45, 68, 78) according to one of the preceding claims, **characterized in that** the base element (2, 16, 29, 34, 46, 70, 80) includes plural membrane carriers (3, 30, 35, 47, 71, 81) that are equipped with hollow fiber membranes wherein the membrane carriers are externally flowable by the liquid (58).

5. The membrane filter (1, 15, 22, 33, 45, 68,78) according to one of the preceding claims, **characterized in that** the gas inlet (8, 17, 28, 41, 54, 83) runs laterally through the opening (13, 19, 24, 37, 49, 84) of the pipe (7, 18, 23, 39, 51, 69, 79).

6. The membrane filter (1, 15, 22, 33, 45, 68, 78) according to one of the claims 1 through 4, **characterized in that** the gas inlet (8, 17, 28, 41, 54, 83) runs laterally through a second opening (52) in the wall (10, 20, 25, 38, 50) of the pipe (7, 18, 23, 39, 51, 69, 79).

7. The membrane filter (1, 15, 22, 33, 45, 68, 78) according to one of the preceding claims, **characterized in that** the base element (2, 16, 29, 34, 46, 70, 80) and the pipe (7, 18, 23, 39, 51, 69, 79) are connected with one another by connection elements (77).

8. The membrane filter (1, 15, 22, 33, 45, 68, 78) according to claim 7, **characterized in that** the connection elements (77) respectively penetrate the pipe (7, 18, 23, 39, 51, 69, 79) and at least one wall (72, 88) of the base element (2, 16, 29, 34, 46, 70, 80).

9. The membrane filter (1, 15, 22, 33,45,68,78) according to one of the claims 7 or 8, **characterized in that** the pipe (7, 18, 23, 39, 51, 69, 79) and the base element (2, 16, 29, 34, 46, 70, 80) are manually disengageable after removal of the connection elements (77).

10. The membrane filter (1, 15, 22, 33, 45, 68, 78) according to one of the claims 1 - 8, **characterized in that** the pipe (7, 18, 23, 39, 51, 69, 79) and the base element (2, 16, 29, 34, 46, 70, 80) are glued together.

## Revendications

1. Filtre à membrane (1, 15, 22, 33, 45, 68, 78) destiné au filtrage d'un liquide (58) à filtrer avec
a. un élément inférieur (2, 16, 29, 34, 46, 70, 80), qui comporte au moins un support de membranes (3, 30, 35, 47, 71, 81), qui peut être contourné par l'écoulement du liquide (58) ou d'un gaz,
b. des membranes à fibres creuses (4, 32, 42) fixées au-dessus dans au moins un support de membranes (3, 30, 35, 47, 71, 81) avec respectivement une lumière (5) dans laquelle un perméat liquide (62) peut être filtré du liquide (58),
c. un conduit (7, 18, 23, 39, 51, 69, 79) extrudé en une pièce et fermé en périphérie, qui entoure les membranes à fibres creuses (4, 32, 42),
d. une entrée de gaz (8, 17, 28, 41, 54, 83) pour faire entrer le gaz sous le filtre à membrane (1, 15, 22, 33, 45, 68, 78),
e. au moins un compartiment de collecte de perméat (10) de l'élément inférieur (2, 16, 29, 34, 46, 70, 80), qui est relié à la lumière (5) pour la collecte du perméat (62) des membranes à fibres creuses (4, 32, 42),
f. une sortie de perméat (11, 27, 36, 48, 76, 82) de l'élément inférieur (2, 16, 29, 34, 46, 70, 80) pour évacuer le perméat (62) depuis au moins un compartiment de collecte de perméat (10) latéralement à l'élément inférieur (2, 16, 29, 34, 46, 70, 80),
***caractérisé en ce* qu'**un bord inférieur (12, 21, 26, 40, 53, 76, 85) du conduit (7, 18, 23, 39, 51, 69, 79) se situe en dessous de la sortie de perméat (11, 27, 36, 48, 76, 82), la sortie de perméat (11, 27, 36, 48, 76, 82) passe latéralement par une ouverture (13, 19, 24, 37, 49, 84) dans une cloison (10, 20, 25, 38, 50) du conduit (7, 18, 23, 39, 51, 69, 79), un interstice annulaire (9, 31) entre au moins un support de membranes (3, 30, 35, 47, 71, 81) et le conduit (7, 18, 23, 39, 51, 69, 79) sert de section d'écoulement ouverte pour le passage du liquide (58) et du gaz et l'élément inférieur (2, 16, 29, 34, 46, 70, 80) et le conduit (7, 18, 23, 39, 51, 69, 79) sont reliés l'un à l'autre.

2. Filtre à membrane (1, 15, 22, 33, 45, 68, 78) selon la revendication 1, ***caractérisé en ce que*** l'ouverture (13, 19, 24, 37, 49, 84) s'étend jusqu'au bord inférieur (12, 21, 26, 40, 53, 76, 85) du conduit (7, 18, 23, 39, 51, 69, 79) .

3. Filtre à membrane (1, 15, 22, 33, 45, 68, 78) selon l'une quelconque des revendications 1 ou 2, ***caractérisé en ce que*** le conduit (7, 18, 23, 39, 51, 69, 79) comporte une section rectangulaire.

4. Filtre à membrane (1, 15, 22, 33, 45, 68, 78) selon l'une quelconque des revendications précédentes, ***caractérisé en ce que*** l'élément inférieur (2, 16, 29, 34, 46, 70, 80) comporte plusieurs supports de membranes (3, 30, 35, 47, 71, 81) dotés de membranes à fibres creuses, qui peuvent être contournés par écoulement du liquide (58).

5. Filtre à membrane (1, 15, 22, 33, 45, 68, 78) selon l'une quelconque des revendications précédentes, ***caractérisé en ce que*** l'entrée de gaz (8, 17, 28, 41, 54, 83) passe latéralement par l'ouverture (13, 19, 24, 37, 49, 84) du conduit (7, 18, 23, 39, 51, 69, 79).

6. Filtre à membrane (1, 15, 22, 33, 45, 68, 78) selon l'une quelconque des revendications 1 à 4, ***caractérisé en ce que*** l'entrée de gaz (8, 17, 28, 41, 54, 83) passe latéralement à travers une deuxième ouverture (52) dans la cloison (10, 20, 25, 38, 50) du conduit (7, 18, 23, 39, 51, 69, 79).

7. Filtre à membrane (1, 15, 22, 33, 45, 68, 78) selon l'une quelconque des revendications précédentes, ***caractérisé en ce que*** l'élément inférieur (2, 16, 29, 34, 46, 70, 80) et le conduit (7, 18, 23, 39, 51, 69, 79) sont reliés entre eux par des éléments de liaison (77) .

8. Filtre à membrane (1, 15, 22, 33, 45, 68, 78) selon la revendication 7, ***caractérisé en ce que*** les éléments de liaison (77) traversent respectivement le conduit (7, 18, 23, 39, 51, 69, 79) et au moins une cloison (72, 88) de l'élément inférieur (2, 16, 29, 34, 46, 70, 80).

9. Filtre à membrane (1, 15, 22, 33, 45, 68, 78) selon l'une quelconque des revendications 7 ou 8, ***caractérisé en ce que*** le conduit (7, 18, 23, 39, 51, 69, 79) et l'élément inférieur (2, 16, 29, 34, 46, 70, 80) peuvent être manuellement amovibles après enlèvement des éléments de liaison (77).

10. Filtre à membrane (1, 15, 22, 33, 45, 68, 78) selon l'une quelconque des revendications 1 à 8, ***caractérisé en ce que*** le conduit (7, 18, 23, 39, 51, 69, 79) et l'élément inférieur (2, 16, 29, 34, 46, 70, 80) sont collés l'un à l'autre.
